# FASCICULE DE BREVET EUROPEEN

(11) **EP 1 699 179 B1**
(45) Date de publication et mention de la délivrance du brevet: **09.09.2009**
(21) Numéro de dépôt: 06003656.3
(22) Date de dépôt: 23.02.2006
(51) Int. Cl.: H04L 12/403

(54) **Procédé de transmission de données de terminaux-esclaves vers un terminal-maître le long d'un bus de communication**
Verfahren zur Datenübertragung von Slave-Endgeräten an ein Master-Endgerät über einen Kommunikationsbus
Method for transmitting data from slave terminals to a master terminal along a communication bus

(30) Priorité: 01.03.2005 FR 0502058
(43) Date de publication de la demande: 06.09.2006
(73) Titulaire: VALEO SYSTEMES THERMIQUES, 78321 Le Mesnil St Denis Cedex (FR)
(72) Inventeur: Huynh, Tan Duc, 93330 Neuilly Sur Marne (FR)

(56) Documents cités:
- EP-A- 0 511 794
- EP-A- 0 702 470
- EP-A- 1 174 799
- WO-A-02/069149

## Description

La présente invention concerne un procédé de transmission de données d'une pluralité de terminaux-esclaves vers un terminal-maître le long d'un bus de communication.

L'invention trouve une application particulièrement avantageuse dans toute installation où des terminaux-esclaves doivent remonter, le long d'un bus de communication, des données à un terminal-maître, gestionnaire de ladite installation, de manière à ce que ce dernier puisse décider des actions à entreprendre en fonction des données reçues des terminaux-esclaves.

A titre d'exemple de telles installations, on citera les systèmes de climatisation pour véhicules automobiles dans lesquels des calculateurs ou interfaces utilisateurs déportés dans différentes zones du véhicule, telles que les portières avant et arrière, reçoivent des utilisateurs des valeurs de consigne pour certains paramètres, notamment la température désirée ou le débit d'air souhaité. Ces valeurs de consigne sont acheminées le long d'un bus de communication vers un calculateur central qui gère alors de manière appropriée les différents organes du système de climatisation, comme les volets de circulation d'air, afin de respecter au mieux les valeurs de consigne reçues.

On connaît de l'état de la technique, en particulier dans le domaine de la climatisation des véhicules automobiles, des procédés de transmission de données qui consistent pour le terminal-maître, le calculateur central dans l'exemple choisi, à interroger séquentiellement les terminaux-esclaves, à savoir les calculateurs ou interfaces utilisateurs déportés, afin d'obtenir de leur part les données nécessaires à la gestion globale du système dont il a la charge. Le terminal-maître ouvre donc des trames de réponse successives dans lesquelles les terminaux-esclaves viennent chacun à leur tour déposer les données dont ils disposent pour en informer le terminal-maître.

Ces procédés de transmission de données connus présentent cependant l'inconvénient qu'ils fonctionnent en mode séquentiel en ce sens que tous les terminaux-esclaves sont systématiquement interrogés chacun à leur tour selon une procédure cyclique, même si les données qu'ils doivent transmettre au terminal-maître n'ont pas changé d'un cycle à l'autre. De plus, les terminaux-esclaves sont dans l'obligation de répondre à l'interrogation du terminal-maître en lui transmettant les données courantes quand bien même ces données auraient déjà été fournies au cycle précédent. Enfin, la longueur de la séquence de données allouée est identique pour tous les terminaux-esclaves, sans qu'il soit tenu compte des spécificités de chaque terminal-esclave. Le temps d'accès et donc le temps de réponse se trouvent anormalement allongés avec comme conséquence que l'utilisateur ne bénéficie pas immédiatement de l'effet recherché. Par ailleurs, la consommation énergétique est augmentée par le fonctionnement séquentiel du bus de communication de l'état de la technique.

Le document EP 1 174 799 divulgue une méthode de transmission de données entre un dispositif maître et plusieurs dispositifs esclaves.

On comprendra qu'il résulte de ces procédés connus une redondance inutile dans la transmission des données et une gestion loin d'être optimisée dans la longueur de la séquence de transmission de données allouée à chaque terminal-esclave.

Aussi, le problème technique à résoudre par l'objet de la présente invention est de proposer un procédé de transmission de données d'une pluralité de terminaux-esclaves vers un terminal-maître le long d'un bus de communication, qui permettrait notamment de réduire et d'ajuster le débit de communication sur le bus au strict besoin des terminaux-esclaves.

La solution au problème technique posé consiste, selon la présente invention, en ce que ledit procédé comprend les étapes consistant à :
a) émettre par le terminal-maître une séquence de contrôle comprenant une séquence de réponse destinée à recevoir des terminaux-esclaves un indicateur de présence de données à transmettre,
b) fournir par les terminaux-esclaves ledit indicateur de présence dans ladite séquence de réponse,
c) fournir par le terminal-maître une autorisation de transmettre des données à un terminal-esclave dont l'indicateur de présence de données à transmettre est positif,
d) transmettre par ledit terminal-esclave lesdites données après l'autorisation reçue du terminal-maître,
e) répéter les étapes c) et d) pour tout terminal-esclave dont l'indicateur de présence de données à transmettre est positif.

Ainsi, on comprend que seuls les terminaux-esclaves ayant de nouvelles données à transmettre au terminal-maître fourniront un indicateur de présence positif, ce qui permet au terminal-maître d'identifier à l'issue de la séquence de réponse les terminaux-esclaves auxquels il donnera à tour de rôle l'autorisation de transmettre des données.

Il résulte du procédé selon l'invention qu'aucune donnée inutile n'est transmise sur le bus de communication. En particulier, aucun terminal-esclave n'a à transmettre des données déjà communiquées lors d'un cycle d'interrogation précédent. Le débit sur le bus de communication se trouve donc réduit au strict minimum nécessaire.

Par ailleurs, l'invention prévoit que les terminaux-esclaves sont repérés par la position de leur indicateur de présence de données à transmettre dans ladite séquence de réponse. De cette manière, le terminal-maître, ayant identifié les terminaux-esclaves devant lui transmettre des données, peut connaître la longueur de la séquence de données à allouer à chacun d'entre eux, ceci au moyen, par exemple, d'une table de correspondance préétablie. La longueur des séquences de données n'est donc pas fixée une fois pour toutes pour l'ensemble des terminaux-esclaves, mais est ajustée en fonction du terminal-esclave considéré.

Il est à noter qu'au lieu d'avoir recours à une table pour connaître la longueur de la séquence de données de chaque terminal-esclave, l'invention propose également que ledit indicateur de présence de données à transmettre comprend un indicateur de longueur des données à transmettre.

Selon un mode de réalisation de l'invention, ledit bus de communication est un bus monofilaire à état dominant et état récessif. Dans ce cas, il est prévu par l'invention que ledit indicateur de présence de données à transmettre est obtenu par forçage à l'état dominant du bus.

Enfin, selon un autre mode de réalisation de l'invention, ledit bus de communication est un bus bifilaire.

La description qui va suivre en regard des dessins annexés, donnés à titre d'exemples non limitatifs, fera bien comprendre en quoi consiste l'invention et comment elle peut être réalisée.
La figure 1 est un schéma de connexion entre un terminal-maître et une pluralité de terminaux-esclaves sur un bus monofilaire.
La figure 2 est un exemple de séquences circulant sur le bus de communication lors de la mise en oeuvre du procédé conforme à l'invention.
La figure 3 est un schéma donnant la constitution d'une séquence de contrôle représentée sur la figure 2.
La figure 4a est un schéma d'un terminal-maître connecté au bus de communication.
La figure 4b est un schéma d'un terminal-esclave connecté au bus de communication.
La figure 5 est un diagramme illustrant les différentes étapes du procédé de communication de données selon l'invention.

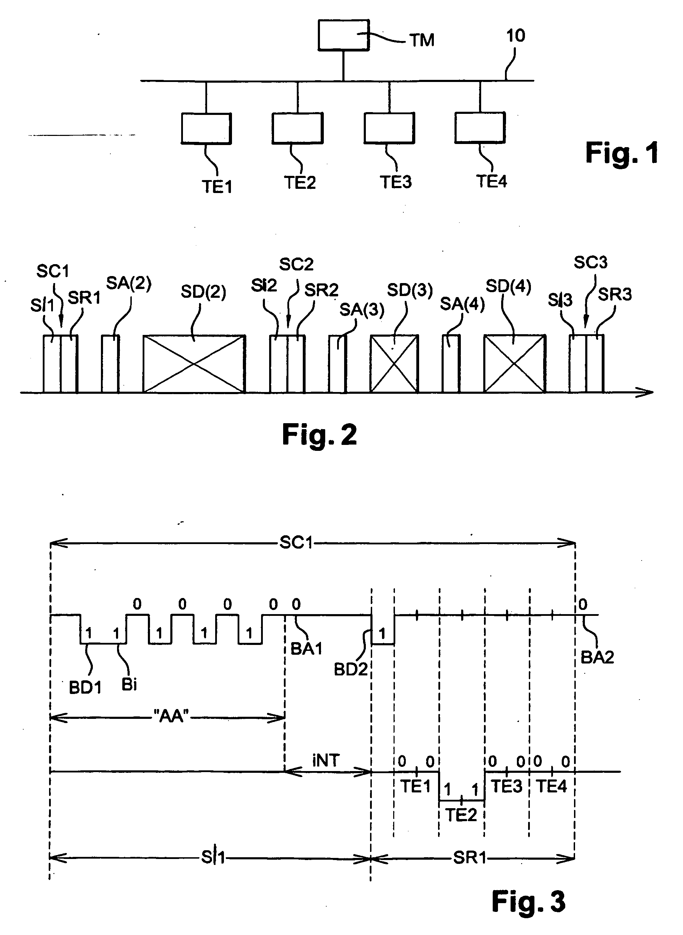

Sur la figure 1 est représenté un bus de communication monofilaire 10 reliant un terminal-maître TM à, par exemple, quatre terminaux-esclaves TE1, TE2, TE3, TE4, l'objet de l'invention étant un procédé permettant auxdits terminaux-esclaves de transmettre des données au terminal-maître au sein notamment d'un système de climatisation d'un véhicule automobile.

Avantageusement, le bus 10 est un bus monofilaire à état dominant et état récessif, conforme à la norme ISO 9141. L'invention n'est toutefois pas limitée à ce type de bus et peut également être mise en oeuvre au moyen d'un bus bifilaire.

Comme l'indique la figure 2, les échanges de communication entre le terminal-maître TM et les terminaux-esclaves TE1, TE2, TE3, TE4 sont organisés autour d'une succession de séquences de contrôle SCi avec i=1, 2, 3 dans l'exemple choisi, l'indice i n'étant qu'un numéro d'ordre chronologique des différentes séquences. Ces séquences de contrôle sont initiées par le terminal-maître TM et ont pour but de lui faire connaître quels sont les terminaux-esclaves ayant de nouvelles données à lui transmettre.

On peut signaler, en variante, que la séquence de réponse peut être initialisée par l'un quelconque des terminaux-esclaves.

A cet effet, chaque séquence de contrôle SCi comprend une séquence d'initialisation Sli suivie d'une séquence de réponse SRi. La séquence d'initialisation a uniquement pour objet d'avertir les terminaux-esclaves de l'arrivée d'une séquence de réponse dans laquelle ils pourront déposer, s'il y a lieu, un indicateur de présence de données à transmettre.

La figure 3 donne, à titre d'exemple, la structure de la séquence SC1 de la figure 2.

Pour identifier une séquence SC1 comme séquence d'initialisation, on peut convenir de la repérer dans la trame par au moins un bit caractéristique, par exemple un bit initial BI égal à 1 en début de séquence, situé juste après le bit de démarrage BD1 qui, selon le protocole UART (« Universal Asynchronous Receiver Transmitter »), précède systématiquement la séquence de huit bits à transmettre. Le mot constituant la séquence d'initialisation est désigné par «AA».

Après un bit d'arrêt BA1 marquant la fin de la séquence d'initialisation S11 et l'interruption INT entre deux séquences de huit bits consécutives dans la trame, la séquence de réponse SR1 débute par un bit de démarrage BD2 à partir duquel les terminaux-esclaves disposent d'une zone de réponse qui leur est propre pour indiquer dans la trame s'ils ont des données à transmettre. La zone de réponse allouée à chaque terminal-esclave est repérée par sa position dans la séquence, laquelle position est définie par une temporisation comptée à partir du bit de démarrage BD2.

Dans l'exemple de la figure 3, le terminal-esclave TE1 dispose d'une zone de réponse de deux bits qui suit immédiatement le bit de démarrage BD2, puis le terminal-esclave TE2 dispose à son tour d'une zone de réponse de deux bits, et ainsi de suite.

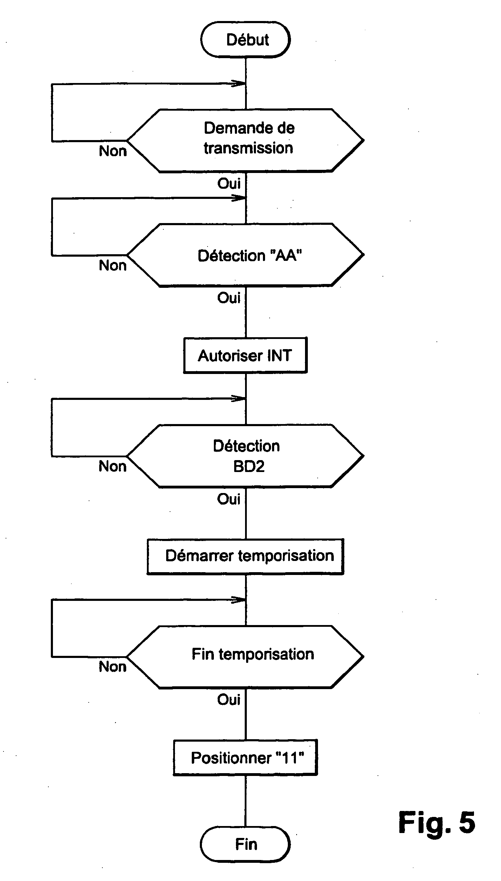

Le déroulement de la séquence de contrôle est représenté sur le diagramme de la figure 5.

Toujours dans l'exemple particulier de la figure 3, seul le terminal-esclave TE2 a placé dans la zone de réponse qui lui est affectée un indicateur de présence de données à transmettre sous la forme d'un mot de deux bits égaux à 1 : «11». Bien entendu, la zone de réponse de chaque terminal-esclave peut avoir un nombre quelconque de bits, le choix de deux bits se justifie ici pour des questions de redondance, compte tenu d'éventuelles pertes de bits sur le bus de communication.

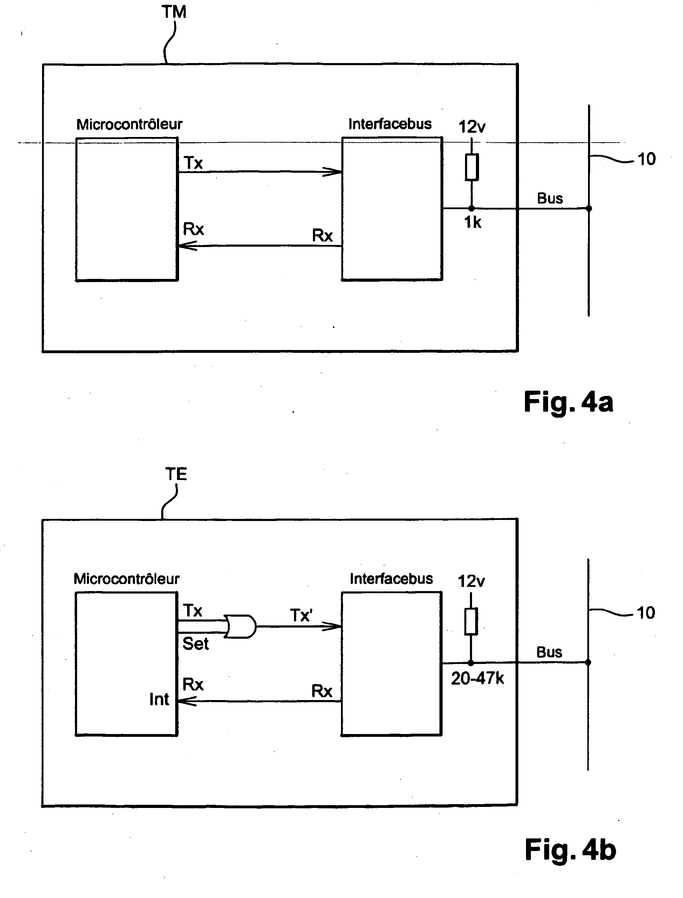

Les bits 1 de l'indicateur de présence «11» peuvent être obtenus par forçage à l'état dominant du bus monofilaire 10 à état dominant et état récessif. Le dispositif permettant à un terminal-esclave de réaliser un tel forçage est montré sur la figure 4b. L'interface entre le microcontrôleur du terminal TE et le bus 10 est constituée d'une porte logique «OU» dont le port de sortie Tx' est forcé à 1 indépendamment de l'état logique du port Tx en appliquant un état logique 1 à la borne «Set». La porte «OU» ne sera pas nécessaire si le port Tx possède déjà une caractéristique de forçage.

La figure 4a donne le schéma d'un terminal-maître associé au terminal-esclave de la figure 4b.

A l'issue de la séquence de contrôle SC1, le terminal-maître est donc capable de déterminer quels sont les terminaux-esclaves qui ont des données à lui transmettre, le terminal TE2 dans l'exemple choisi.

Comme on peut le voir sur la figure 2, le terminal-maître TM émet alors une séquence d'autorisation SA(2) indiquant au terminal-esclave TE2 qu'il peut transmettre les données qu'il doit lui envoyer. L'indice « 2 » entre parenthèses dans le symbole SA(2) fait référence au numéro identifiant le terminal-esclave concerné, ici TE2.

Enfin, en réponse à la séquence d'autorisation SA(2), le terminal TE2 transmet ses données dans une séquence de données SD(2).

Après avoir reçu la séquence de données SD(2), le terminal-maître émet une nouvelle séquence de contrôle SC2 comprenant une séquence d'initialisation SI2, identique à SI1, et une séquence de réponse SR2 à laquelle auront répondu positivement par exemple à la fois les terminaux-esclaves TE3 et TE4. Dans ce cas, le terminal-maître envoie une première séquence d'autorisation SA(3) suivie d'une séquence de données SD(3) envoyée par le terminal TE3, puis une deuxième séquence d'autorisation SA(4) suivie d'une séquence de données SD(4) envoyée par le terminal TE4.

A l'issue de la dernière séquence de données SD(4), le terminal-maître TM envoie à nouveau une séquence de contrôle SC3. Dans l'exemple, de la figure 2, aucun terminal-esclave n'a répondu positivement à cette séquence. Le terminal-maître réémet alors cycliquement une nouvelle séquence de contrôle.

On comprendra que le procédé conforme à l'invention fonctionne de manière asynchrone, ceci étant possible du fait que le terminal-maître connaît à l'avance la longueur de la séquence de données associée à chaque terminal-esclave. L'avantage de ce type de fonctionnement est de limiter la circulation sur le bus au strict minimum nécessaire et donc de diminuer le débit, contrairement aux procédés connus fonctionnant en mode séquentiel.

Le terminal-maître peut connaître la longueur des séquences de données des terminaux-esclaves au moyen d'une table préétablie donnant la correspondance entre longueur et terminal-esclave. On peut également envisager que cette information soit donnée dans un indicateur de longueur associé à l'indicateur de présence, l'ensemble des deux indicateurs étant fourni dans la zone de réponse allouée à chaque terminal-esclave dans la séquence de réponse. Par exemple, la zone de réponse peut s'étendre sur trois bits dont l'un indique que les données seront transmises dans un mot long (bit à 1) ou dans un mot court (bit à 0).

Les indicateurs de présence de données à transmettre étant fournis dans la trame par les terminaux-esclaves indépendamment les uns des autres, il est recommandé, afin d'éviter tout recouvrement, que la précision des horloges desdits terminaux soit la plus élevée possible, mieux que 2% par exemple.

## Revendications

1. Procédé de transmission de données d'une pluralité de terminaux-esclaves (TE1, TE2, TE3, TE4) vers un terminal-maître (TM) le long d'un bus (10) de communication, **caractérisé en ce que** ledit procédé comprend les étapes consistant à :
a) émettre par le terminal-maître (TM) une séquence de contrôle (SCi) comprenant une séquence de réponse (SRi) destinée à recevoir des terminaux-esclaves (TE1, TE2, TE3, TE4) un indicateur de présence de données à transmettre,
b) fournir par les terminaux-esclaves ledit indicateur de présence dans ladite séquence de réponse (SRi),
c) fournir par le terminal-maître (TM) une autorisation (SA) de transmettre des données à un terminal-esclave dont l'indicateur de présence de données à transmettre est positif,
d) transmettre par ledit terminal-esclave lesdites données après l'autorisation reçue du terminal-maître,
e) répéter les étapes c) et d) pour tout terminal-esclave dont l'indicateur de présence de données à transmettre est positif.

2. Procédé selon la revendication 1, **caractérisé en ce que** les terminaux-esclaves (TE1, TE2, TE3, TE4) sont repérés par la position de leur indicateur de présence de données à transmettre dans ladite séquence de réponse (SRi).

3. Procédé selon l'une des revendication 1 ou 2, **caractérisé en ce que** ladite séquence de contrôle (SCi) comprend une séquence d'initialisation (SIi) précédant ladite séquence de réponse (SRi).

4. Procédé selon la revendication 3, **caractérisé en ce que** ladite séquence d'initialisation (SIi) est repérée par au moins un bit caractéristique.

5. Procédé selon l'une quelconque des revendications 1 à 4, **caractérisé en ce que** ledit indicateur de présence de données à transmettre comprend un indicateur de longueur des données à transmettre.

6. Procédé selon l'une quelconque des revendications 1 à 5, **caractérisé en ce que** ladite séquence de réponse (SRi) est initialisée par un terminal-esclave.

7. Procédé selon l'une quelconque des revendications 1 à 6, **caractérisé en ce que** ledit bus (10) de communication est un bus monofilaire à état dominant et état récessif.

8. Procédé selon la revendication 7, **caractérisé en ce que** ledit indicateur de présence de données à transmettre est obtenu par forçage à l'état dominant du bus (10).

9. Procédé selon l'une quelconque des revendications 1 à 8, **caractérisé en ce que** ledit bus (10) de communication est un bus bifilaire.

10. Système comprenant un terminal-maître (TM), au moins un terminal-esclave (TE1, TE2, TE3, TE4) et un bus de communication entre le terminal-maître (TM) et les terminaux-esclaves (TE1, TE2, TE3, TE4) **caractérisé en ce que** le terminal-maître comprend des moyens de transmission d'une séquence de contrôle (SCi) sur le bus de communication, ladite séquence de contrôle (SCi) comprenant une séquence de réponse (SRi) destinée à recevoir des terminaux-esclaves (TE1, TE2, TE3, TE4) un indicateur de présence de données à transmettre, lesdits terminaux-escalves (TE1, TE2, TE3, TE4) comprenant des moyens d'insertion dudit indicateur de présence de données à transmettre dans ladite séquence de réponse (SRi), **en ce que** le terminal-maître (TM) comprend des moyens de transmission d'une autorisation (SA) sur le bus de communication, ladite autorisation (SA) étant donnée à un terminal-esclave dont l'indicateur de présence de données à transmettre est positif, et **en ce que** ledit terminal-esclave, dont l'indicateur de présence de données à transmettre est positif, comprend des moyens de transmission desdites données sur le bus de communication après avoir reçu l'autorisation (SA) du terminal-maître (TM).

## Claims

1. Method for transmitting data from a plurality of slave terminals (TE1, TE2, TE3, TE4) to a master terminal (TM) via a communication bus (10), **characterised in that** said method includes the following steps:
(a) the master terminal (TM) transmits a check sequence (SCi) including a response sequence (SRi), intended to receive, from the slave terminals (TE1, TE2, TE3, TE4), an indicator of the presence of data to be transmitted,
(b) the slave terminals provide said presence indicator in said response sequence (SRi),
(c) the master terminal (TM) provides a data transmission authorisation (SA) to a slave terminal of which the indicator of the presence of data to be transmitted is positive,
(d) said slave terminal transmits said data after receiving the authorisation from the master terminal,
(e) steps (c) and (d) are repeated for any slave terminal of which the indicator of the presence of data to be transmitted is positive.

2. Method according to claim 1, **characterised in that** the slave terminals (TE1, TE2, TE3, TE4) are identified by the position of their indicator of the presence of data to be transmitted in said response sequence (SRi).

3. Method according to any of claims 1 or 2, **characterised in that** said control sequence (SCi) includes an initialisation sequence (SIi) preceding said response sequence (SRi).

4. Method according to claim 3, **characterised in that** said initialisation sequence (SIi) is identified by at least one characteristic bit.

5. Method according to any one of claims 1 to 4, **characterised in that** said indicator of the presence of data to be transmitted includes an indicator of the length of the data to be transmitted.

6. Method according to any one of claims 1 to 5, **characterised in that** said response sequence (SRi) is initialized by a slave terminal.

7. Method according to any one of claims 1 to 6, **characterised in that** said communication bus (10) is a single-wire bus with a dominant state and a recessive state.

8. Method according to claim 7, **characterised in that** said indicator of the presence of data to be transmitted is obtained by forcing the dominant state of the bus (10).

9. Method according to any one of claims 1 to 8, **characterised in that** said communication bus (10) is a two-wire bus.

10. System comprising a master terminal (TM), at least one slave terminal (TE1, TE2, TE3, TE4) and a communication bus between the master terminal (TM) and the slave terminals (TE1, TE2, TE3, TE4), **characterised in that** the master terminal (TM) comprises means for transmitting a control sequence (SCi) to the communication bus, wherein said control sequence (SCi) comprises a response sequence (SRi) intended to receive, from the slave terminals (TE1, TE2, TE3, TE4), an indicator of the presence of data to be transmitted, wherein said slave terminals (TE1, TE2, TE3, TE4) comprise means of inserting said presence indicator into said response sequence (SRi), **in that** the master terminal (TM) comprises means of transmitting an authorisation (SA) to the communication bus, wherein said authorisation (SA) is provided to a slave terminal of which the indicator of the presence of data to be transmitted is positive, and **in that** said slave terminal of which the indicator of the presence of data to be transmitted is positive comprises means of transmitting said data to the communication bus after receiving the authorisation (SA) from the master terminal (TM).

## Patentansprüche

1. Verfahren zur Übertragung von Daten mehrerer Slave-Terminals (TE1, TE2, TE3, TE4) an ein Master-Terminal (TM) entlang eines Kommunikationsbusses (10), **dadurch gekennzeichnet, dass** das verfahren folgende Schritte umfasst:
a) Aussenden einer Kontrollsequenz (SCi) über das Master-Terminal (TM), umfassend eine Antwortsequenz (SRi), die dazu bestimmt ist, von den Slave-Terminals (TE1, TE2, TE3, TE4) einen Anwesenheitsindikator für zu übertragende Daten zu empfangen,
b) Bereitstellen des Anwesenheitsindikators in der Antwortsequenz (SRi) über die Slave-Terminals,
c) Bereitstellen einer Autorisierung (SA) über das Master-Terminal (TM) zum Übertragen von Daten an ein Slave-Terminal, dessen Anwesenheitsindikator für zu übertragende Daten positiv ist,
d) Übertragen der Daten über das Slave-Terminal, nachdem die Autorisierung vom Master-Terminal empfangen wurde,
e) Wiederholen der Schritte c) und d) für jedes Slave-Terminal, dessen Anwesenheitsindikator für zu übertragende Daten positiv ist.

2. Verfahren nach Anspruch 1, **dadurch gekennzeichnet, dass** die Slave-Terminals (TE1, TE2, TE3, TE4) über die Position ihres Anwesenheitsindikators für zu übertragende Daten in der Antwortsequenz (SRi) erfasst werden.

3. Verfahren nach einem der Ansprüche 1 oder 2, **dadurch gekennzeichnet, dass** die Kontrollsequenz (SCi) eine Initialisierungssequenz (SIi) umfasst, die der Antwortsequenz (SRi) vorausgeht.

4. Verfahren nach Anspruch 3, **dadurch gekennzeichnet, dass** die Initialisierungssequenz (SIi) über mindestens ein kennzeichnendes Bit erfasst wird.

5. Verfahren nach einem der Ansprüche 1 bis 4, **dadurch gekennzeichnet, dass** der Anwesenheitsindikator für zu übertragende Daten einen Längenindikator für die zu übertragenden Daten umfasst.

6. Verfahren nach einem der Ansprüche 1 bis 5, **dadurch gekennzeichnet, dass** die Antwortsequenz (SRi) über ein Slave-Terminal initialisiert wird.

7. Verfahren nach einem der Ansprüche 1 bis 6, **dadurch gekennzeichnet, dass** der Kommunikationsbus (10) ein Eindraht-Bus mit dominantem und rezessivem Zustand ist.

8. Verfahren nach Anspruch 7, **dadurch gekennzeichnet, dass** der Anwesenheitsindikator für zu übertragende Daten durch Zwangsversetzung des Busses (10) in den dominanten Zustand erhalten wird.

9. Verfahren nach einem der Ansprüche 1 bis 8, **dadurch gekennzeichnet, dass** der Kommunikationsbus (10) ein Zweidraht-Bus ist.

10. System, umfassend ein Master-Terminal (TM), mindestens ein Slave-Terminal (TE1, TE2, TE3, TE4) und einen Kommunikationsbus zwischen dem Master-Terminal (TM) und den Slave-Terminals (TE1, TE2, TE3, TE4), **dadurch gekennzeichnet, dass** das Master-Terminal Mittel für die Übertragung einer Kontrollsequenz (SCi) auf den Kommunikationsbus umfasst, wobei die Kontrollsequenz (SCi) eine Antwortsequenz (SRi) umfasst, die dazu bestimmt ist, von den Slave-Terminals (TE1, TE2, TE3, TE4) einen Anwesenheitsindikator für zu übertragende Daten zu empfangen, wobei die Slave-Terminals (TE1, TE2, TE3, TE4) Mittel zum Einfügen des Anwesenheitsindikators für zu übertragende Daten in die Antwortsequenz (SRi) umfassen, dadurch, dass das Master-Terminal (TM) Mittel für die Übertragung einer Autorisierung (SA) auf dem Kommunikationsbus umfasst, wobei die Autorisierung (SA) an ein Slave-Terminal gegeben wird, dessen Anwesenheitsindikator für zu übertragende Daten positiv ist, und dadurch, dass das Slave-Terminal, dessen Anwesenheitsindikator für zu übertragende Daten positiv ist, Mittel für die Übertragung der Daten auf dem Kommunikationsbus umfasst, nachdem es die Autorisierung (SA) vom Master-Terminal (TM) empfangen hat.
